**Europäisches Patentamt**

**European Patent Office**

**Office européen des brevets**

(11) Veröffentlichungsnummer: **0 355 669 B1**

(12) **EUROPÄISCHE PATENTSCHRIFT**

(45) Veröffentlichungstag der Patentschrift: **06.04.94**

(51) Int. Cl.⁵: **G01S 15/42**, G01S 15/10

(21) Anmeldenummer: **89115047.6**

(22) Anmeldetag: **16.08.89**

(54) **Unterwasser-Peilgerät.**

(30) Priorität: **19.08.88 DE 3828151**

(43) Veröffentlichungstag der Anmeldung:
**28.02.90 Patentblatt 90/09**

(45) Bekanntmachung des Hinweises auf die
Patenterteilung:
**06.04.94 Patentblatt 94/14**

(84) Benannte Vertragsstaaten:
**DE ES FR GB IT**

(56) Entgegenhaltungen:
DE-A- 2 703 413
US-A- 2 871 459
US-A- 4 119 940
US-A- 4 322 974

(73) Patentinhaber: **Honeywell-Elac-Nautik GmbH**
**Postfach 25 20**
**D-24024 Kiel(DE)**

(72) Erfinder: **Höring, Friedrich, Dr.**
**Moorblek 31**
**D-2300 Kiel(DE)**

(74) Vertreter: **Rentzsch, Heinz, Dipl.-Ing. et al**
**Honeywell Holding AG**
**Patent- und Lizenzabteilung**
**Kaiserleistrasse 39**
**Postfach 10 08 65**
**D-63008 Offenbach (DE)**

**Beschreibung**

Die Erfindung betrifft ein elektroakustisches Unterwasser-Peilgerät mit um eine vertikale Achse gleichförmig rotierenden Sende- und Empfangswandlern, welches zur Rundum-Abtastung eines das Peilgerät umgebenden Gewässerbereichs dient.

Wegen der im Vergleich zu Radarsignalen geringen Ausbreitungsgeschwindigkeit von akustischen Signalen im Wasser ist es bei einer schnellen gleichförmigen Drehbewegung von Sende- und Empfangswandler in Azimutrichtung nicht sinnvoll, beide Wander achsparallel mit einem scharf gebündelten Richtdiagramm auszurichten. Infolge der verhältnismäßig langen Echolaufzeiten zwischen Sendeimpuls und empfangenem Echo hat sich der Empfangswandler nämlich bereits aus der Senderichtung und damit der Richtung zum Ziel herausbewegt, ehe das Echo ankommt. Man könnte zwar in bekannter Weise (DE-OS 27 03 413) eine schrittweise gemeinsame Schwenkbewegung von Sende- und Empfangswandler vorsehen, um nacheinander den gesamten Azimutbereich abzutasten, hierfür würde jedoch eine relativ lange Zeitspanne erforderlich sein. Außerdem ist die Erzeugung einer solchen schrittweisen Schwenkbewegung mechanisch aufwendig. Strebt man einen möglichst einfachen Aufbau eines solchen unter Umständen nur einmalig verwendbaren Peilgeräts an und fordert zugleich eine Rundumabtastung in relativ kurzer Zeit, so scheidet die gleichzeitige Verwendung von Sende- und Empfangswandlern mit zur Bestimmung der Zielpeilung hinreichend scharf gebündelten Antennen-Diagrammen bei Wasserschall-Peilgeräten aus.

Aus DE-PS 767 520 ist eine Horizontal-Echolotanlage mit den Merkmalen des Oberbegriffs der Ansprüche 1 und 7 bekannt. Das Sendediagramm läuft dem Empfangsdiagramm voraus. Während einer Sendefolge wird ein einziger Impuls abgestrahlt und mit zunehmender Entfernung wird die Drehgeschwindigkeit der Wandler verringert, damit im Hinblick auf die gewünschte Eindeutigkeit der Anzeige wegen der bei großen Entfernungen verlängerten Laufzeit weniger Impulse pro Zeiteinheit ausgesandt werden. Für Unterwasser-Peilgeräte, bei deren Einsatz zunächst unbekannt ist, in welcher Entfernung Ziele vorhanden sind und bei dem im Zuge der Rundum-Abtastung in den verschiedenen Sektoren Ziele in unterschiedlicher Entfernung auftreten können, ist ein solches Verfahren ungeeignet.

Eine dem Oberbegriff der Ansprüche 2 und 8 entsprechende Sonaranlage ist in US-A 28 71 459 beschrieben. Der Sendewandler strahlt dabei in einem ersten Schwenkbereich kontinuierlich eine erste Frequenz, in einem sich anschließenden zweiten Winkelbereich eine zweite Frequenz und in einem darauffolgenden dritten Winkelbereich eine dritte Frequenz ab, wobei sich diese Folge während eines Umlaufs des Sendewandlers mehrfach wiederholt. Der Empfangswandler läuft dem Sendewandler winkelmäßig nach und wird nacheinander auf drei den genannten Sendefrequenzen zugeordnete Empfangskanäle aufgeschaltet, wobei jeweils derjenige Kanal gesperrt wird, dessen Durchlaßfrequenz vom Sendewandler gerade abgestrahlt wird. Infolge des Winkelversatzes und der angegebenen Breite von Sende- und Empfangsdiagramm tastet diese Ortungsvorrichtung jeweils einen ringförmigen Entfernungsbereich um den Standort von Sende- und Empfangswandler ab. Dabei läßt sich die radiale Tiefe des Abtastbereiches durch Verbreitern des Sendediagramms und der Innendurchmesser des ringförmigen Abtastbereichs durch Verändern des Winkelversatzes zwischen Sender- und Empfänger ändern, allerdings nicht während ein und desselben Umlaufs des Wandlers. Diese bekannte Anordnung ermöglicht somit nur das Erfassen von Objekten, welche sich innerhalb eines vorgegebenen Entfernungsbereichs um die Ortungsanlage herum befinden.

Weiterhin zeigt die GB-A 11 25 152 eine Sonaranlage mit einem Rundumstrahler als Sendewandler, so daß nur das Empfangsrichtdiagramm umläuft. Der Sendewandler strahlt einen entsprechend lang bemessenen Impuls ab, der solange andauern muß, bis der umlaufende Richtempfänger den gesamten Azimut abgetastet hat. Die Verwendung derartig langer Sendeimpulse hat eine schlechte Energieausnutzung zur Folge und eignet sich insbesondere wegen der Gefahr von Mehrfachechos zur Ortung weiter entfernt liegender Ziele nicht. Darüber hinaus ist das Peilgerät selbst leicht zu orten.

Es besteht somit die Aufgabe, ein Unterwasser-Peilgerät zu schaffen, mit dem innerhalb eines vorgegebenen Entfernungsbereiches und bei vorgegebener Peilgenauigkeit die Umgebung des Peilgeräts innerhalb einer hinreichend kurzen Zeitspanne von beispielsweise 3s vollständig nach etwaigen Zielen oder Störkörpern abgetastet werden kann und dabei der gerätemäßige Aufwand möglichst gering ist. Peilgeräte mit gleichzeitig in mehrere Richtungen strahlenden und aus mehreren Richtungen empfangenen in Azimutrichtung gleichförmig über den Umfang verteilten Wandlergruppen scheiden dabei aus Kostengründen aus.

Die Lösung der gestellten Aufgabe gelingt mit den in den unabhängigen Ansprüchen 1, 2, 7 und 8 gekennzeichneten Ausführungsformen der Erfindung, denen gemeinsam die Verwendung entweder eines Sendewandlers mit breitem Richtdiagramm in Verbindung mit einem scharf gebündelten Empfangswandler oder umgekehrt eines scharf gebündelten Sendewandlers in Verbindung mit einem Empfangswandler mit großem Öffnungswinkel ist. Dabei rotieren beide Wandler gleichförmig, und die Hauptsenderichtung läuft gegen die Hauptempfangsrichtung um einen Vorhaltwinkel von der halben Breite der jeweils breiteren Richtcharakteristik voraus. Außerdem ist allen Ausführungsformen gemeinsam, daß während einer durch die maximale Echolaufzeit vorgegebenen Sendefolge im vorgegebenen zeitlichen Abstand mehrere Sendeimpulse abgestrahlt und diese Sendeimpulse unterschiedlich codiert sind. Während durch die Verwendung eines scharf bündelnden Wandlers in Verbindung mit einem Wandler mit großer Öffnungsweite und das Voreilen der Hauptsenderichtung eine ständige gegenseitige Überlappung von Sende- und Empfangssektor gewährleistet ist, wird durch die Verwendung mehrerer codierter Sendeimpulse auch eine vollständige Überdeckung jedes Sektors sowie eine eindeutige Winkelzuordnung der Empfangsimpulse gewährleistet. Weitere vorteilhafte Ausgestaltungen der Erfindung sind in den Unteransprüchen beschrieben.

Die Drehbewegung der Wandleranordnung kann entweder durch einen geeigneten Antrieb oder durch eine Drehbewegung hervorrufende Leitflächen an einem das Peilgerät aufnehmenden Gehäuse hervorgerufen werden, wenn dieses beispielsweise nach dem Abwurf aus einem Flugzeug auf Grund seines Gewichts im Wasser absinkt. Die ermittelte Peilrichtung zum Ziel kann im Falle der Gewässerüberwachung zur Auslösung eines Alarms oder zur Einleitung von Maßnahmen zur Bekämpfung eines Ziels ausgewertet werden. Während bei den Peilgeräten nach den Ansprüchen 1 und 2 eine diskrete Codierung der Sendeimpulse erfolgt, sehen die Ansprüche 7 und 8 ein kontinuierliches Durchstimmen der Sendefrequenz zwischen einem unteren und einem oberen Frequenz-Grenzwert vor, wobei die jeweilige Frequenz sich aus der Anfangslage des Sendewandlers zu Beginn der Wobbelperiode und der Winkelbewegung innerhalb des Öffnungswinkels ergibt.

Die Erfindung wird nachfolgend anhand in der Zeichnung wiedergegebener Ausführungsbeispiele erläutert. Dabei zeigt

Fig. 1 schematisch ein Peilgerät, welches einen Sendewandler mit großem Öffnungswinkel und einen scharf bündelnden Empfangswandler verwendet;

Fig. 2 eine Anordnung mit scharf bündelndem Sendewandler und einem Empfangswandler mit großer Winkelüberdeckung;

Fig. 3 das Blockschaltbild eines Peilgeräts mit einer Wandleranordnung gemäß Fig. 1 bei Verwendung diskreter nacheinander ausgesandter Sendefrequenzen; und

Fig. 4 das Blockschaltbild eines Peilgeräts mit einer Wandleranordnung nach Fig. 1 bei kontinuierlicher Frequenzmodulation des Sendesignals.

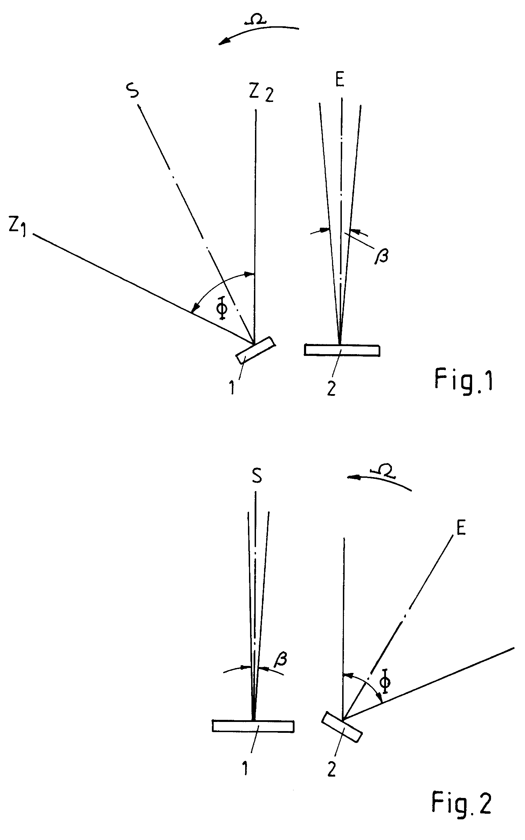

In den Figuren 1 und 2 sind der Sendewandler 1 und der Empfangswandler 2 jeweils dicht nebeneinander angeordnet, obwohl sie genausogut übereinander liegen könnten. Die gewählte Darstellung ist jedoch für die Erläuterung der Arbeitsweise übersichtlicher. Es sei angenommen, daß sich die Wandleranordnung im Gegenuhrzeigersinn gleichförmig mit einer Winkelgeschwindikgeit $\Omega$ um eine gemeinsame Schwenkachse dreht. Legt man eine maximale Reichweite des Peilgeräts $r_m$ zugrunde, so beträgt die maximale Echolaufzeit $t_m = 2r_m/c$, wobei c die Schallgeschwindigkeit im Wasser ist. Würde man sowohl den Sendewandler als auch den Empfangswandler scharf bündelnd ausbilden und achsparallel ausrichten, so würde das nach der Zeit $t_m$ zurückkommende Echo nicht aufgenommen werden, weil der Empfangswandler inzwischen sich mit seiner Hauptempfangsrichtung aus der Hauptsenderichtung zur Zeit der Schallaussendung herausgedreht hat. Man muß deshalb entweder, wie in Fig. 1 angegeben, einen scharf bündelnden Empfangswandler 2 zusammen mit einem über einen breiten Öffnungswinkel $\Phi$ abstrahlenden Sendewandler 1 oder umgekehrt, wie in Fig. 2 wiedergegeben, einen scharf bündelnden Sendewandler 1 in Verbindung mit einem über einen breiten Öffnungswinkel $\Phi$ empfangenden Empfangswandler 2 verwenden. Die Winkelauflösung wird in beiden Fällen durch den Öffnungswinkel des scharf bündelnden Wandlers bestimmt. Der Öffnungswinkel $\Phi$ hängt von der maximalen Echolaufzeit $t_m$, vom Öffnungswinkel $\beta$ des scharf bündelnden Wandlers sowie von der Winkelgeschwindigkeit $\Omega$ ab, mit der sich beide Wandler gemeinsam drehen. Unterstellt man eine beliebig scharfe Bündelung des scharf bündelnden Wandlers, so muß der Winkel $\Phi$ verständlicherweise größer sein als der Winkelbereich, den der scharf bündelnde Wandler während der maximalen Echolaufzeit überstreicht, d.h. es muß gelten: $\Phi \geq \Omega t_m = 2 \Omega r_m/c$. Um sicherzustellen, daß sich Sende- und Empfangsrichtdiagramm während der gesamten Echolaufzeit hinreichend überlappen, muß die Hauptachse S des Sendewandlers um einen Winkel $\Phi/2$ der Hauptachse E des Empfangswandlers vorauslaufen.

Mit der bisher geschilderten Verwendung zweier Wandler unterschiedlicher Bündelung ist jedoch eine lückenlose Abtastung für den gesamten Azimutbereich nicht möglich. Stellt man sich, bezogen auf Fig. 1 beispielsweise vor, daß bei der gegebenen Winkelstellung der beiden Wandler ein Sendeimpuls in Richtung der Hauptstrahlrichtung S ausgesandt wird und das Ziel in Richtung dieser Hauptstrahlachse S und zwar im Abstand $r_m$ liegt, so kommt das Echo nach der maximalen Echolaufzeit $t_m$ zum Empfänger zurück, und dieser hat inzwischen seine Hauptempfangsrichtung E um einen Winkel $\Phi$ gedreht. Er blickt also bereits in Richtung der Linie Z1; das Echo wird nicht empfangen. Nur wenn das Ziel im Abstand der halben maximalen Zielentfernung liegt, käme das Echo aus der Richtung S zu einem Zeitpunkt zurück, in dem der Empfangswandler 2 in Richtung S blickt. Liegt andererseits das Ziel in Richtung Z1 in der maximalen Entfernung $r_m$, so käme das Echo gerade zu einem Zeitpunkt zurück, wenn der Empfangswandler in Richtung Z1 ausgerichtet ist. Ein Ziel in Richtung Z2 könnte nur angepeilt werden, wenn es unmittelbar vor der Wandleranordnung läge. Es ist also ersichtlich, daß wegen der unterschiedlichen Öffnungswinkel von Sende- und Empfangswandler eine gleichmäßige Bedeckung des während der maximalen Echolaufzeit zurückgelegten Schwenkwinkelbereichs nur dann möglich ist, wenn während dieser Zeit mehrere Sendeimpulse abgestrahlt werden. Die Anzahl der erforderlichen Sendeimpulse richtet sich nach dem Verhältnis des Öffnungswinkels $\Phi$ des breit strahlenden Wandlers zum Öffnungswinkel $\beta$ des stark gebündelten Wandlers. Beträgt beispielsweise $\Phi = 16°$ und $\beta = 2°$, so müßten in gleichen Abständen während der Schwenkung der Wandleranordnung um den Winkel $\Phi$ insgesamt wenigstens $16:2 = 8$ Impulse in gleichmäßigen Abständen ausgesandt werden, d.h. $N = \Phi/\beta$. Damit ist unabhängig von der Schwenkgeschwindigkeit eine vollständige Abtastung des Umfelds in Azimutrichtung möglich.

Bei der Anordnung nach Fig. 1 bestimmt die jeweilige Empfangsrichtung E des Empfangswandlers die Peilung des Zieles. Wird darüber hinaus eine Entfernungsbestimmung zum Ziel gewünscht, so führt das bisher beschriebene Verfahren zu Mehrdeutigkeiten, weil der Empfangswandler nicht erkennen kann, welcher der N nacheinander abgestrahlten Impulse vom Ziel reflektiert wurde. Je weiter das Ziel entfernt ist, umso länger ist der Echoimpuls unterwegs. Weit entfernte Ziele müssen also von einem früher ausgesandten Impuls angestrahlt worden sein als Nahziele, wenn das Echo zu einem bestimmten Zeitpunkt, nämlich bei Ausrichtung des Empfangswandlers auf das Ziel ankommt. Um hier eine Unterscheidung und damit eine Entfernungsbestimmung zu ermöglichen, werden die einzelnen nacheinander ausgesandten Sendeimpulse codiert, beispielsweise mit unterschiedlichen Frequenzen abgestrahlt. Dann kann aus der jeweils empfangenen Frequenz auf den Aussendezeitpunkt geschlossen und somit Laufzeit und Zielentfernung ermittelt werden.

Während bei der Anordnung nach Fig. 1 die Zielrichtung eindeutig durch die Hauptempfangsrichtung des Empfangswandlers bestimmt ist und die Impulscodierung der Beseitigung von Mehrdeutigkeiten in der Entfernungsbestimmung dient, ist bei der Ausführungsform gemäß Fig. 2 zwar die Entfernung eindeutig bestimmbar, die Zielrichtung jedoch mehrdeutig. Hier sendet der Sendewandler 1 einen räumlich scharf gebündelten Sendeimpuls aus, während der Empfangswandler 2 einen großen Öffnungswinkel $\Phi$ seines Richtdiagramms hat. Wie leicht einzusehen ist, wird auch hier für eine vollständige Überdeckung des gesamten Azimutbereichs die Abstrahlung von mehreren Impulsen während der Schwenkung beider Richtdiagramme um den Winkel $\Phi$ benötigt. Der Empfangswandler 2 kann nicht erkennen, aus welchem speziellen Winkel innerhalb des Bereichs $\Phi$ das Echo zurückkommt. Wohl aber kann der Empfänger aus dem bekannten Sendezeitpunkt und dem Eintreffzeitpunkt des Echos die Laufzeit und damit die Entfernung des Ziels ermitteln. Zur Feststellung der Zielrichtung muß der Empfänger erkennen können, in welche Richtung der scharf bündelnde Sendewandler den Impuls abgestrahlt hat. Da aus den zuvor genannten Gründen nacheinander mehrere Impulse abgestrahlt werden, ist wiederum eine Codierung unerläßlich. Aus der Codierung des empfangenen Echos, beispielsweise aus seiner Frequenz ist erkennbar, wann innerhalb der Sendefolge der betreffende Sendeimpuls abgestrahlt wurde und in welche Richtung zu jener Zeit der Sendewandler geblickt hat. Dies ist die gesuchte Peilrichtung zum Ziel.

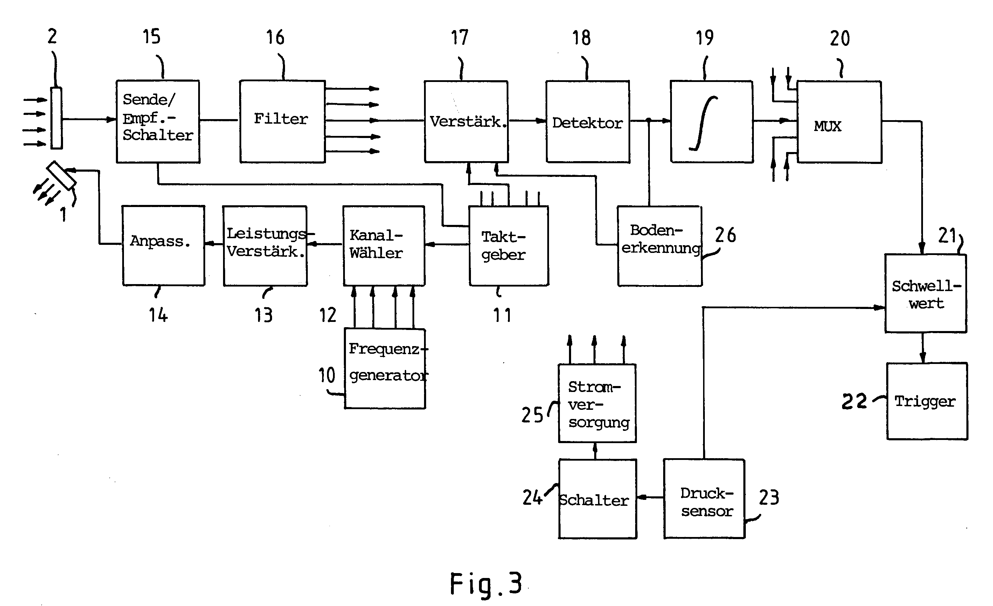

Steht die Peilrichtung des Ziels im Vordergrund des Interesses und ist die Zielentfernung von untergeordneter Bedeutung, so empfiehlt sich die Verwendung eines Peilverfahrens gemäß Fig. 1. Der Aufbau der hierzu dienenden Sende- und Empfangsschaltungen des Peilgeräts ist schematisch im Blockschaltbild nach Fig. 3 wiedergegeben.

In einem Frequenzgenerator 10 werden von einem gemeinsamen Taktgeber 11 gesteuert die verschiedenen Sendefrequenzen erzeugt und über einen Kanalwähler 12 nacheinander dem Leistungsverstärker 13 und über eine Anpassungsschaltung 14 dem Sendewandler 1 zugeleitet. Der Empfangswandler 2 speist über einen Sende/Empfangsschalter 15 und eine auf die verschiedenen Sendefrequenzen abgestimmte Filterschaltung 16 die den einzelnen Sendefrequenzen zugeordneten Kanäle eines Mehrkanalverstärkers 17. Die Ausgangssignale des Filters 16 können im Rhythmus des Taktgebers 17 auf in eine gemeinsame Zwischenfrequenz umgesetzt und im Verstärker 17 verstärkt werden. Der Verstärkungsgrad jedes Kanals läßt sich, da die Frequenz und damit der entsprechende Sendezeitpunkt bestimmt ist, in bekannter Weise entfernungsabhängig regeln, damit die üblicherweise schwachen Echos ferner Ziele an seinem Ausgang ein gleich starkes Ausgangssignal liefern wie die relativ starken Empfangssignale von Nahzielen. Jeder der den einzelnen Frequenzen zugeordneten Verstärkerkanäle umfaßt außer dem Regelverstärker 17 einen nachgeschalteten Echodetektor 18 und einen darauffolgenden Integrator 19. Die Ausgangssignale aller Verstärkerkanäle 17 bis 19 werden den Eingängen eines Multiplexers 20 zugeführt, der ebenfalls vom Taktgeber 11 gesteuert die einzelnen Kanäle nacheinander abtastet. Er speist an seinem Ausgang eine Schwellwertschaltung 21. Diese kann entweder eine die Zielrichtung anzeigende Alarmvorrichtung steuern oder eine beispielsweise im gleichen Schwimmkörper wie das Peilgerät untergebrachte Waffe 22 zur Bekämpfung des nunmehr hinsichtlich seiner räumlichen Lage bekannten Zieles initiieren. Ein Druckfühler 23 gibt beim Eintauchen des Peilgeräts in das Wasser einerseits den Schwellwertschalter 21 frei und aktiviert andererseits über einen Schalter 24 die Stromversorgungseinrichtung 25 für das Peilgerät.

An den Ausgang der Detektoren 18 ist ferner eine Bodenerkennungsschaltung 26 angeschlossen, welche auf die Verstärker 17 derart einwirkt, daß das üblicherweise wesentlich stärkere Echo vom Meeresboden nicht die automatische Verstärkungsregelung der Verstärker 17 beeinflußt und auch nicht als Echtziel erkannt wird.

Die Signalverarbeitung kann entweder wie im Blockschaltbild angedeutet analog oder digital mit Hilfe eines Mikroprozessors erfolgen. Die Erkennung der unterschiedlichen Sendefrequenzen erfolgt im Filter 16. Wird anstelle unterschiedlicher Frequenzen eine andere Art der Codierung der einzelnen Sendeimpulse angewandt, so sind anstelle eines Frequenzfilters entsprechende auf die betreffenden Codierungen ansprechende Diskriminatoren einzusetzen. Der Sendeempfangsschalter 15 sperrt die Empfangskanäle während der Aussendung der Sendeimpulse, um ein Übersteuern und Verstopfen der Empfangskanäle durch die Sendeimpulse selbst zu verhindern.

Wird anstelle einer Wandleranordnung gemäß Fig. 1 eine solche entsprechend Fig. 2 eingesetzt, so bleibt der Schaltungsaufbau des Peilgeräts im wesentlichen der gleiche. Lediglich wird dann wie oben erwähnt unmittelbar die Laufzeit und damit die Entfernung gemessen, während die Zielrichtung aus der Codierung ermittelt werden muß. Schaltungsanordnungen um aus der Laufzeit eines Echoimpulses die Zielentfernung zu ermitteln bzw. im Echoverstärker eine entfernungsabhängige Verstärkungsregelung vorzusehen, sind aus der Echolottechnik in zahlreichen Varianten bekannt.

Bei der bisherigen Darstellung der Erfindung ist davon ausgegangen worden, daß einzelne Sendeimpulse unterschiedlich codiert, beispielsweise mit unterschiedlicher Sendefrequenz abgestrahlt werden. Anstatt unterschiedliche diskrete Sendefrequenzen zu verwenden, kann man auch die Frequenz während einer Lotperiode kontinuierlich zwischen einem unteren Frequenzwert $f_u$ und einem oberen Frequenzwert $f_o$ durchstimmen. Dieses Verfahren ist aus der Radartechnik an sich bekannt. Es läßt sich abgewandelt auch zur Lösung der vorliegenden Aufgabe anwenden, wenn gemäß den Ansprüchen 7 oder 8 verfahren wird.

Bei diesem Verfahren (CTFM) ist nicht notwendigerweise die Dauer des an- oder absteigenden Frequenzverlaufes mit der maximalen Reichweite $r_m$ verknüpft. Die Information über die Zielentfernung steckt z. B. in der Frequenzdifferenz zwischen dem augenblicklich empfangenen und dem gerade ausgesandten Signal. Selbst wenn für die Funktion des Gesamtgerätes die explizite Kenntnis der Zielentfernung nicht erforderlich ist, so ist eine entfernungsabhängige Regelung der Signalverstärkung im allgemeinen doch notwendig und wünschenswert. Da in diesem Fall die Differenzfrequenz ein Maß für die Zielentfernung darstellt, kann die entfernungsabhängige Verstärkungssteuerung durch eine frequenzabhängige Verstärkung, also ein Filter für Signale der Differenzfrequenz mit geeignetem Frequenzverlauf, ersetzt werden.

Vorteil des Frequenzmodulationsverfahrens in dieser Anwendung ist, daß nicht wie im oben beschriebenen Verfahren für jedes der $N = \Phi/\beta$ frequenz- oder anderweitig codierten Signale ein getrennter Signalkanal mit eigener entfernungsabhängigen Verstärkungseinstellung vorzusehen ist, sondern daß ein einziger Empfangskanal ausreicht. Weniger günstig ist die im allgemeinen notwendige größere Empfangsbandbreite und damit das verringerte Nutz/Stör-Verhältnis. Ferner muß für ein geringes Übersprechen zwischen den ständig und zur gleichen Zeit arbeitenden Sende- und Empfangskanälen gesorgt werden. Es kann sich dabei sowohl um elektrisches als auch um akustisches Übersprechen handeln. Ein Mittel, die Auswirkung des Übersprechens (Differenzfrequenz) zu verringern, ist von akustischen Dämm- und elektrischen Abschirmmaßnahmen abgesehen, auch hier eine geeignete Filterung der Differenzfrequenz. Dies führt aber u. U. zu einer Totzone im Nahbereich. Die Wandleranordnung muß bei diesem Verfahren die nach Fig. 1 sein, da sonst keine eindeutige Aussage über die Zielpeilung gemacht werden kann.

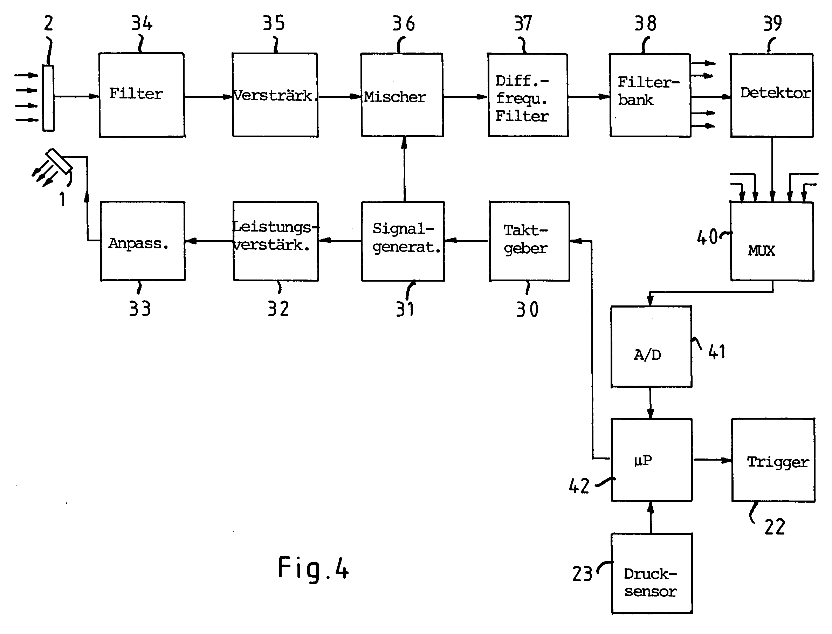

In Fig. 4 ist ein Blockschaltbild einer solchen Anordnung wiedergegeben.

Wie in Fig. 3 sind ein Sendewandler 1 und ein Empfangswandler 2 vorgesehen. Der von einem Zeitgeber 30 gesteuerte Signalgenerator 31 erzeugt ein sich wiederholendes linear frequenzmoduliertes Signal. Dabei ist im allgemeinen zweitrangig, ob es sich um ein Signal absteigender oder ansteigender Frequenz handelt. Dieses Signal wird im Leistungsverstärker 32 verstärkt und über Anpaßglieder 33 zur Impedanzanpassung vom Sendewandler 1 in einem breiten Sektor Φ abgestrahlt. Der Empfangszweig enthält das hochbündelnde Hydrofon 2, das die akustischen Echosignale in elektrische zurückverwandelt. Das Filter 34 beseitigt Störsignale, die nicht im Arbeitsfrequenzbereich der Anlage liegen. Die verbleibenden Signale werden im Verstärker 35 verstärkt und im Mischer 36 mit dem Signal des Signalgenerators 31 gemischt. Dabei kann es durchaus zweckmäßig sein, hierzu eine gegenüber der augenblicklich abgestrahlten Sendefrequenz um einen festen Betrag versetzte Frequenz zu verwenden. Das anschließende Filter 37 filtert die Differenzfrequenz heraus, unterdrückt die Übersprechanteile und bevorzugt die höheren Differenzfrequenzen und damit die entfernteren Zielechos. Eine Filterbank 38 ermöglicht eine störbefreite Signaldetektion in einer Bank von Detektoren 39. Die erkannten Signale werden im Multiplexer 40 zusammengeführt und über einen A/D-Umsetzer 41 dem Prozessor 42 zugeleitet. Diese Zentraleinheit steuert den Taktgeber 30 und damit den Sendeprozeß und führt die Signalverarbeitung und -reduktion durch. Dazu gehören die Erkennung und Ausblendung des Bodenechos unter Zuhilfenahme der Signale des Drucksensors 23 sowie die endgültige Ausgabe des Triggersignales beim Erkennen eines gültigen Zieles.

Bei den hier beschriebenen Blockschaltbildern handelt es sich jeweils um Prinzipskizzen. Es sind durchaus andere Realisierungen denkbar. So können die Signalerzeugung, die frequenz-selektive Filterung und die Detektion auch von einem Signalprozessor vorgenommen werden. Die Schnittstellen zwischen Analog- und Digitalverarbeitung verschieben sich dann sinngemäß. Gleiches gilt für die Ausführungsform nach Fig. 3. Auch hier wird in der praktischen Realisierung ein Microprozessor mit zugeordneten Speichern den größten Teil der Signalerzeugung bzw. -codierung und der Signalverarbeitung durchführen.

**Patentansprüche**

1. Elektroakustisches Unterwasser-Peilgerät mit um eine vertikale Achse gleichförmig rotierenden Sende- und Empfangswandlern, wobei
    a) der Sendewandler (1) einen scharf gebündelten Strahl in Richtung seiner Hauptstrahlungsrichtung aussendet;
    b) der Empfangswandler (2) einen größeren Öffnungswinkel Φ seines Richtdiagramms aufweist als der Sendewandler;
    c) die Hauptsenderichtung um einen vorgegebenen Winkel gegenüber der Hauptempfangsrichtung vorläuft;

d) eine Auswerteschaltung des Empfängers die Einfallsrichtung des Echos vom Ziel ermittelt,
    **dadurch gekennzeichnet, daß**
    e) der Empfangswandler (2) einen Öffnungswinkel Φ seines Empfangsdiagramms aufweist, welcher der Gleichung $\Phi \geq 2r_m\Omega/c$ genügt, wobei $r_m$ die maximal zu erfassende Zielentfernung, c die Schallgeschwindigkeit im Ausbreitungsmedium und $\Omega$ die Winkelgeschwindigkeit der Rotation von Sende- und Empfangswandler ist;
    f) der Vorlaufwinkel Φ/2 beträgt;
    g) während eines jeden der aufeinanderfolgenden und jeweils der maximalen Echolaufzeit entsprechenden Zeitintervalle im vorgegebenen zeitlichen Abstand mehrere (N) Sendeimpulse abgestrahlt werden;
    h) die während eines solchen Zeitintervalls ($t_m$) nacheinander abgestrahlten Sendeimpulse unterschiedlich codiert sind;
    i) im Empfänger mehrere auf die einzelnen Codierungen ansprechende Signalkanäle (16-19) vorgesehen sind; und
    j) die Auswerteschaltung aus der empfangenen Codierung und der dieser zugeordneten Winkelstellung des Sendewandlers die Einfallsrichtung des Echos vom Ziel ermittelt (Fig.2).

2. Elektroakustisches Unterwasser-Peilgerät mit um eine vertikale Achse gleichförmig rotierenden Sende- und Empfangswandlern, wobei
    a) der Empfangswandler (2) ein gebündeltes Empfangsdiagramm in Richtung seiner Hauptempfindlichkeitsrichtung aufweist;
    b) der Sendewandler (1) einen größeren Öffnungswinkel seines Sendediagramms hat als der Empfangswandler;
    c) die Hauptsenderichtung um einen vorgegebenen Winkel gegenüber der Hauptempfangsrichtung vorläuft; und
    d) eine Auswerteschaltung des Empfängers aus der Winkelstellung des Empfangswandlers beim Empfang des Echos die Einfallsrichtung des Echos zum Ziel ermittelt;
    **dadurch gekennzeichnet, daß**
    e) der Sendewandler (1) einen Öffnungswinkel Φ seines Richtdiagramms aufweist, welcher der Gleichung $\Phi \geq 2r_m\Omega/c$ genügt, wobei $r_m$ die maximal zu erfassende Zielentfernung, c die Schallgeschwindigkeit im Ausbreitungsmedium und $\Omega$ die Winkelgeschwindigkeit der Rotation von Sende- und Empfangswandler ist;
    f) der Vorlaufwinkel Φ/2 beträgt;
    g) während eines jeden der aufeinanderfolgenden und jeweils der maximalen Echolaufzeit entsprechenden Zeitintervalle im vorgegebenen zeitlichen Abstand mehrere (N) Sendeimpulse abgestrahlt werden;

h) die während eines solchen Zeitinterevalls ($t_m$) nacheinander abgestrahlten Sendeimpulse unterschiedlich codiert sind;

i) im Empfänger mehrere auf die einzelnen Codierungen ansprechende Signalkanäle (16-19) vorgesehen sind (Fig. 1 und 3).

3. Peilgerät nach Anspruch 2, **dadurch gekennzeichnet,** daß die Auswerteschaltung des Empfängers aus dem durch die empfangene Codierung bestimmten Sendezeitpunkt und dem Zeitpunkt des Echoempfangs die Echolaufzeit t = 2r/c und hieraus die Zielentfernung r ermittelt.

4. Peilgerät nach Anpsruch 2 oder 3, **dadurch gekennzeichnet,** daß die Codierung der aufeinanderfolgenden Sendeimpulse durch unterschiedliche Sendefrequenzen erfolgt.

5. Peilgerät nach Anspruch 2, 3 oder 4, **gekennzeichnet durch**

a) einen einerseits die Codierung der Sendeimpulse und andererseits die Umschaltung der Eingänge eines an die verschiedenen Empfangskanäle (16-19) anzuschließenden Multiplexers (20) steuernden Taktgeber (11);

b) einen Codegenerator (10) für die einzelnen Sendeimpulse;

c) eine auf die einzelnen Codierungen (Frequenzen) des Sendesignals abgestimmte Filterschaltung (16) im Empfänger;

d) einen Echodetektor (18) mit nachgeschaltetem Integrator (19) in jedem der Empfangskanäle zwischen Filterschaltung (16) und Multiplexer (20)

e) eine mit dem Ausgang des Multiplexers (20) in Verbindung stehende Alarm- oder Auslösevorrichtung (22).

6. Peilgerät nach einem der Ansprüche 1 bis 5, **dadurch gekennzeichnet,** daß bei einem Öffnungswinkel Φ des Wandlers mit dem breiten Richtdiagramm und bei einem Öffnungswinkel β des scharf bündelnden Wandlers die Anzahl N der während einer Sendefolge im gleichmäßigen zeitlichen Abstand ausgesandten Semdeimpulse zumindest N = Φ/β beträgt.

7. Elektroakustisches Unterwasser-Peilgerät mit um eine vertikale Achse gleichförmig rotierenden Sende- und Empfangswandlern, wobei

a) der Sendewandler (1) einen scharf gebündelten Strahl in Richtung seiner Hauptstrahlungsrichtung aussendet;

b) der Empfangswandler (2) einen größeren Öffnungswinkel Φ seines Richtdiagramms aufweist als der Sendewandler;

c) die Hauptsenderichtung um einen vorgegebenen Winkel gegenüber der Hauptempfangsrichtung vorläuft;

d) eine Auswerteschaltung des Empfängers die Einfallsrichtung des Echos vom Ziel ermittelt,

**dadurch gekennzeichnet, daß**

e) der Empfangswandler (2) einen Öffnungswinkel Φ seines Empfangsdiagramms aufweist, welcher der Gleichung Φ ≥ $2r_m\Omega/c$ genügt, wobei $r_m$ die maximal zu erfassende Zielentfernung, c die Schallgeschwindigkeit im Ausbreitungsmedium und Ω die Winkelgeschwindigkeit der Rotation von Sende- und Empfangswandler ist;

f) der Vorlaufwinkel Φ/2 beträgt;

g) während eines jeden der aufeinanderfolgenden und jeweils der maximalen Echolaufzeit entsprechenden Zeitintervalle ($t_m$) die Frequenz der Sendestrahlung gleichförmig zwischen einem unteren Grenzwert ($f_u$) und einem oberen Grenzwert ($f_o$) geändert wird;

h) im Empfänger ein den Frequenzbereich der Sendestrahlung überdeckender Frequenzdetektor (38,39) vorgesehen ist;

i) die Auswerteschaltung (40-42) aus dem Ausgangssignal des Frequenzdetektors und der der Empfangsfrequenz zugeordneten Winkelstellung des Sendewandlers die Einfallsrichtung des Echos vom Ziel ermittelt (Fig. 2).

8. Elektroakustisches Unterwasser-Peilgerät mit um eine vertikale Achse gleichförmig rotierenden Sende- und Empfangswandlern, wobei

a) der Empfangswandler (2) ein gebündeltes Empfangsdiagramm in Richtung seiner Hauptempfindlichkeitsrichtung aufweist;

b) der Sendewandler (1) einen größeren Öffnungswinkel seines Sendediagramms hat als der Empfangswandler;

c) die Hauptsenderichtung um einen vorgegebenen Winkel gegenüber der Hauptempfangsrichtung vorläuft; und

d) eine Auswerteschaltung des Empfängers aus der Winkelstellung des Empfangswandlers beim Empfang des Echos die Einfallsrichtung des Echos zum Ziel ermittelt;

**dadurch gekennzeichnet, daß**

e) der Sendewandler (1) einen Öffnungswinkel Φ seines Richtdiagramms aufweist, welcher der Gleichung Φ ≥ $2r_m\Omega/c$ genügt, wobei $r_m$ die maximal zu erfassende Zielentfernung, c die Schallgeschwindigkeit im Ausbreitungsmedium und $\Omega$ die Winkelgeschwindigkeit der Rotation von Sende- und Empfangswandler ist;

f) der Vorlaufwinkel $\Phi/2$ beträgt;

g) während eines jeden der aufeinanderfolgenden und jeweils der maximalen Echolaufzeit entsprechenden Zeitintervalle ($t_m$) die Frequenz der Sendestrahlung gleichförmig zwischen einem unteren Grenzwert ($f_u$) und einem oberen Grenzwert ($f_o$) geändert wird;

h) im Empfänger ein den Frequenzbereich der Sendestrahlung überdeckender Frequenzdetektor vorgesehen ist (Fig. 1 und 4).

9. Peilgerät nach Anspruch 8, **dadurch gekennzeichnet,** daß die Auswerteschaltung des Empfängers aus dem durch die Empfangsfrequenz bestimmten Sendezeitpunkt und dem Zeitpunkt des Echoempfangs die Echolaufzeit t = 2r/c und hieraus die Zielentfernung r ermittelt.

10. Peilgerät nach Anspruch 8 oder 9, **gekennzeichnet durch**

a) einen durch einen Taktgeber (30) gesteuerten Frequenzmodulator (31) im Sendekanal (30-33);

b) einen Mischer (36) im Empfangskanal (34-38), welchem einerseits das Sendesignal und andererseits das Empfangssignal zugeführt werden;

c) eine mit dem Ausgang des Mischers (36) in Verbindung stehende selektive Detektorschaltung (38,39);

d) einen an die Ausgänge der Detektorschaltung (38,39) angeschlossenen Multiplexer (40) mit nachgeschaltetem A/D-Umsetzer (41);

e) einen an dem A/D-Umsetzer angeschlossenen Prozessor (42) und eine von diesem gesteuerte Alarm- oder Auslösevorrichtung (22). (Fig. 1 u. 4).

11. Peilgerät nach Anspruch 1 oder 7, **dadurch gekennzeichnet,** daß die Auswerteschaltung des Empfängers aus der Echolaufzeit t = 2r/c die Zielentfernung r ermittelt.

## Claims

1. An electroacoustic underwater position-determining apparatus comprising transmitting and receiving transducers rotating uniformly about a vertical axis, wherat

a) the transmission transducer (1) transmits a sharply focussed beam in the direction of its main beam direction;

b) the reception transducer (2) has a broader aperture angle of its antenna diagram than the transmission transducer;

c) the main transmission direction precedes the main reception direction by a predetermined angle;

d) an evaluating circuit of the receiver determines the direction from which the echos are reflected by the target;

**characterized in that**

e) the reception transducer (2) has an aperture angle $\Phi$ of its reception diagram, which angle meets the formula $\Phi \geq \Omega t_m = 2 \Omega\ r_m/c$, whereat $r_m$ is the maximum determinable target distance, c is the velocity of sound in the propagation medium, and $\Omega$ is the angular velocity of the rotation of the transmission and receiving transducers;

f) the leading angle is $\Phi/2$;

g) during each of several successive time intervals, each corresponding to the maximum echo traveling time, several transmission pulses (N) are emitted with a predetermined time distance;

h) the successively radiated transmission pulses transmitted during such a time interval ($t_m$) are coded differently;

i) in the receiver several signal-processing channels (16 to 19) are provided responding to the individual codings; and

j) the evaluation circuit determines the direction of incidence of the echos from the target from the received coding and the associated angular position of the transmission transducer (Fig. 2).

2. An electroacoustic underwater position-determining apparatus comprising transmitting and receiving transducers rotating uniformly about a vertical axis, whereat

a) the receiver transducer (2) has a focussed reception diagram in the direction of its main direction of sensitivity;

b) the transmission transducer (1) has a broader aperture angle of its transmission diagram than the reception transducer;

c) the main transmission direction precedes the main reception direction by a predetermined angle; and

d) an evaluating circuit of the receiver determines the direction of incidence of the echo from the target from the angular position of the reception transducer when receiving the echo;

**characterized in that**

e) the transmission transducer (1) has an aperture angle $\Phi$ of its direction diagram which meets the equation $\Phi \geq 2r_m\Omega/c$, whereat $r_m$ is the maximum target distance to be recognized, c is the velocity of sound within the propagation medium, and $\Omega$ is the angular velocity of the rotation of the transmission and reception transducers;

f) the lead angle is $\Phi/2$;

g) during each of several successive time intervals, each corresponding to the maximum echo traveling time, several transmission pulses (N) are emitted with a predetermined time distance;

h) the successively emitted transmission pulses radiated during such a time interval $t_m$ are coded differently;

i) in the receiver several signal-processing channels (16 to 19) are provided responding the individual codings (Figure 1 and 3).

3. The apparatus according to claim 1, **characterized in that** the evaluation circuit of the receiver determines the echo traveling time t = 2r/c from the instant of transmission as determined by the received coding and from the instant of receiving the echo and from this traveling time calculates the target distance r.

4. The apparatus according to claim 2 or 3, **characterized in that** the coding of the successive transmission pulses is provided by different transmission frequencies.

5. The apparatus according to claim 2, 3 or 4, **characterized by**

a) a clock (11) controlling on the one hand the coding of the transmission pulses and controlling on the other hand the switching of the inputs of a multiplexer (20), which has to be connected to the various reception channels (16 to 19);

b) a code generator (10) for the individual transmission pulses;

c) a filter circuit (16) in the receiver, which filter circuit is tuned to the individual codings (frequencies) of the transmission signal;

d) an echo detector (18) with a successive integrator (19) in each of the receiver channels between the filter circuit (16) and the multiplexer (20);

e) an alarm or release device (22) connected to the output of the multiplexer (20).

6. The apparatus according to one of the claims 1 to 5, **characterized in that** with an aperture angle $\Phi$ of the transducer having the broader antenna diagram and with an aperture angle $\beta$ of the sharply focussing transducer the number N of the transmission pulses sent out during a transmission sequence in uniform time intervals is at least N = $\Phi/\beta$.

7. An electroacoustic underwater position-determining apparatus comprising transmitting and receiving transducers rotating uniformly about a vertical axis, whereat

a) the transmission transducer (1) transmits a sharply focussed beam in the direction of its main beam direction;

b) the reception transducer (2) has a larger aperture angle $\Phi$ of its directive diagram than the transmission transducer;

c) the main transmission direction precedes the main reception direction by a predetermined angle;

d) an evaluation circuit of the receiver determines the direction of incidence of the echos from the target;

**characterized in that**

e) the reception transducer (2) has an aperture angle $\Phi$ of its reception diagram which meets the equation $\Phi \geq 2r_m\Omega/c$, whereat $r_m$ is the maximum target range to be determined, c is the velocity of sound in the propagation medium, and $\Omega$ is the angular velocity of the rotation of the transmitting and the receiving transducers;

f) the lead angle is $\Phi/2$;

g) during each successive time interval $t_m$ corresponding to the maximum echo traveling time the frequency of the transmitted radiation is uniformly changed between a lower limit ($f_u$) and an upper limit ($f_o$);

h) a frequency detector (38, 39) is provided in the receiver covering the frequency range of the transmitter radiation; i) the evaluation circuit (40 to 42) determines the direction of incidence of the echos from the target from the output signal of the frequency detector and the angular position associated with the received frequency.

8. An electroacoustic underwater position determining apparatus comprising transmitting and receiving transducers rotating uniformly about a vertical axis, whereat

a) the reception transducer (2) has a focussed reception diagram in the direction of its main sensitivity;

b) the transmission transducer (1) has a broader aperture angle of its transmission diagram than the reception transducer;

c) the main transmission direction precedes the main reception direction by a predetermined angle; and

d) an evaluation circuit of the receiver determines the direction of incidence of the echos from the target from the angular position of the reception transducer when receiving the echo;

**characterized in that**

e) the transmission transducer (1) has an aperture angle $\Phi$ of its direction diagram which meets the equation $\Phi \geq 2r_m\Omega/c$, whereat $r_m$ is the maximum target distance to be recognized, c is the velocity of sound within the propagation medium, and $\Omega$ is the angular velocity of the rotation of the transmission and reception transducers;

f) the lead angle is $\Phi/2$;

g) during each successive time interval ($t_m$), each corresponding to the maximum echo travelling time, the frequency of the transmission radiation is uniformly changed between a lower limit ($f_u$) and an upper limit ($f_o$);

h) a frequency detector is provided in the receiver covering the frequency range of the transmitted radiation (Figure 1 and 4).

9. The apparatus according to claim 8, **characterized in that** the evaluation circuit of the receiver determines the echo traveling time t = 2r/c from the instant of transmission as determined by the received frequency and from the instant of receiving the echo and from this traveling time calculates the target distance r.

10. The apparatus of claim 8 or 9, **character-ized by**

a) a frequency modulator (31) provided in the transmission channel (30 - 33) and controlled by a clock (30);

b) a mixer (36) within the receiver channel (34 to 38), which mixer is supplied with the transmitted signal on the one hand and with the received signal on the other hand;

c) a selective detector circuit (38, 39) connected to the output of the mixer (36);

d) a multiplexer (40) with a subsequent A/D converter (41), said multiplexer connected to the outputs of the detector circuit (38, 39);

e) a processor (42) connected to the A/D converter and an alarm or trigger device (22) controlled by said processor (Figure 1 and 4).

11. The apparatus of claim 1 or 7, **characterized in that** the evaluation circuit of the receiver determines the target distance r from the echo travelling time t = 2r/c.

**Revendications**

1. Appareil de localisation électroacoustique sous-marin comportant des convertisseurs d'émission et de réception qui tournent uniformément autour d'un axe vertical, dans lequel

a) le convertisseur d'émission (1) émet un faisceau focalisé sous la forme d'un pinceau fin, dans sa direction de rayonnement principale;

b) le convertisseur de réception (2) possède un angle d'ouverture $\Phi$ de son diagramme directionnel, plus étendu que celui du convertisseur d'émission;

c) la direction d'émission principale est en avance d'un angle prédéterminé par rapport à la direction de réception principale;

d) un circuit d'évaluation du récepteur détermine la direction d'incidence de l'écho produit à partir de la cible,

caractérisé par le fait que

e) l'angle d'ouverture $\Phi$ du diagramme de réception du convertisseur de réception (2) est tel qu'on a la relation $\Phi \geq 2\,r_m\Omega/c$, $r_m$ étant la distance maximale de détection de la cible, c la vitesse du son dans le milieu de propagation, et $\Omega$ la vitesse angulaire de rotation des convertisseurs d'émission et de réception;

f) l'angle d'avance est égal à $\Phi/2$;

g) pendant chacun des intervalles de temps successifs et qui correspondent respectivement à la durée maximale de propagation des échos, plusieurs (N) impulsions d'émission sont émises pendant l'intervalle de temps prédéterminé;

h) les impulsions d'émission émises successivement pendant l'intervalle de temps ($t_m$) sont codées différemment;

i) dans le récepteur, il est prévu plusieurs canaux de transmission de signaux (16-19) qui correspondent aux différents codages; et

j) le circuit d'évaluation détermine la direction d'incidence de l'écho de la cible à partir du codage reçu et de la position angulaire, qui est associée à ce codage, du convertisseur d'émission (fig. 2).

2. Appareil de localisation électroacoustique sous-marin comportant des convertisseurs d'émission et de réception qui tournent uniformément autour d'un axe vertical, dans lequel

a) le convertisseur de réception (2) présente un diagramme de réception de faisceau directionnel dans sa direction de sensibilité principale;

b) l'angle d'ouverture du diagramme d'émission du convertisseur d'émission (1) est supérieur à celui du convertisseur de réception;

c) la direction d'émission principale est en avance d'un angle prédéterminé par rapport à la direction de réception principale; et

d) un circuit d'évaluation du récepteur détermine à partir de la position angulaire du convertisseur de réception, lors de la réception de l'écho, la direction d'incidence de l'écho en direction de la cible,

    caractérisé en ce que

e) l'angle d'ouverture $\Phi$ du diagramme directionnel du convertisseur d'émission (1) est tel qu'on a la relation $\Phi \geq 2\, r_m\Omega/c$, $r_m$ étant la distance maximale de détection de la cible, c la vitesse du son dans le milieu de propagation, et $\Omega$ la vitesse angulaire de la rotation des convertisseurs d'émission et de réception;

f) l'angle d'avance est égal à $\Phi/2$;

g) pendant chacun des intervalles de temps successifs et qui correspondent respectivement à la durée maximale de propagation des échos, plusieurs (N) impulsions d'émission sont émises pendant l'intervalle de temps prédéterminé;

h) les impulsions d'émission émises successivement pendant l'intervalle de temps ($t_m$) sont codées différemment;

i) dans le récepteur, il est prévu plusieurs canaux de transmission de signaux (16-19) qui correspondent aux différents codages (fig. 1 et 3).

3. Appareil de localisation selon la revendication 2, caractérisé en ce que le circuit d'évaluation du récepteur détermine la durée de propagation des échos t = 2r/c à partir de l'instant d'émission déterminé par le codage de réception et à partir de l'instant de réception de l'écho, et détermine, à partir de là, la distance r de la cible.

4. Appareil de localisation selon la revendication 2 ou 3, caractérisé en ce que le codage des impulsions d'émission successives s'effectue sur la base de fréquences d'émission différentes.

5. Appareil de localisation selon la revendication 2, 3 ou 4, caractérisé par

    a) un générateur de cadence (11), qui commande d'une part le codage des impulsions d'émission et d'autre part la commutation des entrées d'un multiplexeur (20) devant être raccordé aux différents canaux de réception (16-19);

    b) un générateur de codes (10) pour les différentes impulsions d'émission;

    c) un circuit de filtre (16) réglé sur les différents codes (fréquences) du signal d'émission, dans le récepteur;

    d) un détecteur d'échos (18) en aval duquel est branché un intégrateur (19), dans chacun des canaux de réception entre un circuit de filtre (16) et un multiplexeur (20),

    e) un dispositif d'alarme ou de déclenchement (22) relié à la sortie du multiplexeur (20).

6. Appareil de localisation selon l'une des revendications 1 à 5, caractérisé en ce que, pour un angle d'ouverture $\Phi$ du convertisseur possédant un diagramme directionnel large et pour un angle d'ouverture $\beta$ du convertisseur réalisant une focalisation fine, le nombre N des impulsions d'émission émises pendant une suite d'émission en étant séparées par le même intervalle de temps, est égal au moins à N = $\Phi/\beta$.

7. Appareil de localisation électroacoustique sous-marin comportant des convertisseurs d'émission et de réception qui tournent uniformément autour d'un axe vertical, dans lequel

    a) le convertisseur d'émission (1) émet un faisceau focalisé sous la forme d'un pinceau fin, dans sa direction de rayonnement principale;

    b) l'angle d'ouverture $\Phi$ du diagramme directionnel du convertisseur de réception (2) est supérieur à celui du convertisseur d'émission;

    c) la direction d'émission principale est en avance d'un angle prédéterminé par rapport à la direction de réception principale;

    d) un circuit d'évaluation du récepteur détermine la direction d'incidence de l'écho à partir de la cible,

        caractérisé en ce que

    e) l'angle d'ouverture $\Phi$ du diagramme de réception du convertisseur de réception (2) est tel qu'on a la relation $\Phi \geq 2\, r_m\Omega/c$, $r_m$ étant la distance maximale de détection de la cible, c la vitesse du son dans le milieu de propagation, et $\Omega$ la vitesse angulaire de la rotation des convertisseurs d'émission et de réception;

    f) l'angle d'avance est égal à $\Phi/2$;

    g) la fréquence du rayonnement émis est modifiée uniformément entre une fréquence limite inférieure ($f_u$) et une fréquence limite supérieure ($f_o$), pendant chacun des intervalles de temps successifs ($t_m$), qui correspon-

dent respectivement à la durée maximale de propagation de l'écho;

h) dans le récepteur il est prévu un détecteur de fréquence (38,39) couvrant la gamme des fréquences du rayonnement d'émission;

i) le circuit d'évaluation (40-42) détermine la direction d'incidence de l'écho à partir de la cible à partir du signal de sortie du détecteur de fréquence et de la position angulaire du convertisseur d'émission, associée à la fréquence de réception (fig. 2).

8. Appareil de localisation électroacoustique sous-marin comportant des convertisseurs d'émission et de réception qui tournent uniformément autour d'un axe vertical, dans lequel

a) le convertisseur de réception (2) présente un diagramme de réception de faisceau directionnel, dans sa direction de sensibilité principale;

b) l'angle d'ouverture du diagramme d'émission du convertisseur d'émission (1) est supérieur à celui du convertisseur de réception;

c) la direction d'émission principale est en avance d'un angle prédéterminé par rapport à la direction de réception principale; et

d) un circuit d'évaluation du récepteur détermine à partir de la position angulaire du convertisseur de réception, lors de la réception de l'écho, la direction d'incidence de l'écho en direction de la cible,
    caractérisé en ce que

e) l'angle d'ouverture $\Phi$ du diagramme directionnel du convertisseur d'émission (1) est tel qu'on a la relation $\Phi \geq 2\ r_m\Omega/c$, $r_m$ étant la distance maximale de détection de la cible, c la vitesse du son dans le milieu de propagation, et $\Omega$ la vitesse angulaire de la rotation des convertisseurs d'émission et de réception;

f) l'angle d'avance est égal à $\Phi/2$;

g) la fréquence du rayonnement émis est modifiée uniformément entre une fréquence limite inférieure ($f_u$) et une fréquence limite supérieure ($f_o$), pendant chacun des intervalles de temps successifs ($t_m$),qui correspondent respectivement à la durée maximale de propagation de l'écho;

h) dans le récepteur, il est prévu un détecteur de fréquence qui couvre la gamme des fréquences du rayonnement d'émission (fig. 1 et 4).

9. Appareil de localisation selon la revendication 8, caractérisé en ce que le circuit d'évaluation du récepteur détermine la durée de propagation de l'écho (t = 2r/c) à partir de l'instant d'émission déterminé par la fréquence de réception et de l'instant de la réception de l'écho, et détermine à partir de là la distance r de la cible.

10. Appareil de localisation selon la revendication 8 ou 9, caractérisé par

a) un modulateur de fréquence (31) commandé par un générateur de cadence (30) et situé dans le canal d'émission (30-33);

b) un mélangeur (36) situé dans le canal de réception (34-38) et auquel sont envoyés d'une part le signal d'émission et d'autre part le signal de réception;

c) un circuit de détection sélectif (38,39) relié à la sortie du mélangeur (36);

d) un multiplexeur (40) raccordé aux sorties du circuit de détection (38,39) et en aval duquel est branché un convertisseur analogique/numérique (41);

e) un processeur (42) raccordé au convertisseur analogique/numérique, et un dispositif d'alarme ou de déclenchement (22) commandé par ce processeur. (Fig. 1 et 4).

11. Appareil de localisation selon la revendication 1 ou 7, caractérisé en ce que le circuit d'évaluation du récepteur détermine la distance r de la cible à partir de la durée t = 2r/c de propagation de l'écho.

Fig.1

Fig.2

13

Fig. 3

14

Fig.4